# EUROPÄISCHE PATENTANMELDUNG

(11) **EP 0 711 059 A1**
(43) Veröffentlichungstag der Anmeldung: **08.05.1996**
(21) Anmeldenummer: 95115051.5
(22) Anmeldetag: 25.09.1995
(51) Int. Cl.: H04M 11/04, H04M 11/00

(54) **Verfahren zum Uebertragen von Teilnehmerdaten zwischen Endgeräten eines Fernmeldenetzes**

(30) Priorität: 01.11.1994 CH 3257/94
(71) Anmelder: Siemens Schweiz AG, CH-8047 Zürich (CH)
(72) Erfinder: Fehlmann, Werner, CH-4107 Ettingen (CH); Nussbaumer, Iwan, CH-4254 Liesberg-Dorf (CH)

(57) **Zusammenfassung**

Das Verfahren besteht darin, dass zwischen mindestens einer an das Vermittlungsnetz (SN) angeschlossenen Steuereinheit (SE1, ..., SEn) und einem ebenfalls an das Vermittlungsnetz (SN) angeschlossenen Endgerät (TE1, ..., TEi) in einem ersten Verfahrensschritt eine Verbindung aufgebaut wird. In einem zweiten Verfahrensschritt werden vom Endgerät (TE1, ..., TEi) an die Steuereinheit (SE1, ..., SEn) Teilnehmerdaten und ein für das Endgerät (TE1, ..., TEi) charakteristischer Identifikationscode übermittelt, der in der Steuereinheit (SE1, ..., SEn) mit einem erwarteten Identifikationscode verglichen wird. Anschliessend wird in einem dritten Verfahrensschritt die Verbindung wieder abgebaut. In einer weiteren Ausführungsform des erfindungsgemässen Verfahrens wird vor dem zweiten Verfahrensschritt ein Ansagetext von der Steuereinheit (SE1, ..., SEn) an das Endgerät (TE1, ..., TEi) übermittelt.
Ferner können mehrere Steuereinheiten (SE1, ..., SEn) in einem nach ISDN- (Integrated Services Digital Networks)- Norm realisierten Fernmeldenetz zur Alarmierung von Teilnehmern des Vermittlungsnetzes (SN) verwendet werden, wobei nicht alle Steuereinheiten (SE1, ..., SEn) mit allen Leistungsmerkmalen versehen sein müssen. Insbesondere müssen nicht alle Steuereinheiten (SE1, ..., SEn) vor Ort konfigurierbar sein, da eine Konfiguration mit Hilfe einer Fernsteuerung über das Fernmeldenetz oder über ein lokales Netzwerk von einer voll ausgebauten Steuereinheit (SE1, ..., SEn) aus vorgenommen werden kann.

## Beschreibung

Die vorliegende Erfindung betrifft ein Verfahren nach dem Oberbegriff des Patentanspruchs 1 sowie eine Anwendung desselben.

Die Alarmierung von Pikettdiensten, wie beispielsweise der Feuerwehr oder der Sanität, erfolgt vorzugsweise über das Fernmeldenetz, indem die betroffenen Personen einer Pikettmannschaft einzeln aufgeboten und über ihre frühestmögliche Einsatzbereitschaft befragt werden. Dabei ist es von grösster Wichtigkeit, dass ein Einsatzleiter möglichst schnell über den Bestand der ihm für einen Einsatz zur Verfügung stehenden Pikettmannschaft informiert wird. Falls dies nicht der Fall ist oder falls nicht genügend Pikettpersonen rechtzeitig am Einsatzort sein können, müssen umgehend zusätzliche Pikettdienste aufgeboten werden.

Eine mögliche Alarmierung besteht darin, dass jede einzelne Person der Pikettmannschaft durch den Einsatzleiter selbst oder durch einen eigens für die Alarmierung vorgesehenen Operator aufgeboten wird, was zu erheblichen Verzögerungen führt, denn die von den einzelnen Personen der Pikettmannschaft erhaltenen Daten müssen manuell zusammengetragen und ausgewertet werden.

Der vorliegenden Erfindung liegt daher die Aufgabe zugrunde, ein Verfahren zum Übertragen von Teilnehmerdaten zwischen an ein Vermittlungsnetz angeschlossenen Endgeräten anzugeben, das ohne dauernde Anwesenheit von Bedienpersonal ausgelöst und das kostengünstig realisiert werden kann.

Diese Aufgabe wird durch die im kennzeichnenden Teil des Patentanspruchs 1 angegebenen Massnahmen gelöst. Vorteilhafte Ausgestaltungen der Erfindung sowie eine Anwendung des Verfahrens sind in weiteren Ansprüchen angegeben.

Die Erfindung weist folgende Vorteile auf: Indem eine Alarmierung von verschiedenen Endgeräten` von mindestens einer Steuereinheit aus automatisch durchgeführt wird, können Kosten erheblich reduziert werden, denn die ganze Alarmierung kann quasi durch einen Tastendruck ausgelöst werden. Eigens für die Alarmierung eingesetzte Operatoren werden nicht benötigt.

Ferner werden die Ergebnisse der zur Alarmierung der Teilnehmer aufgebauten Verbindungen und die dabei übertragenen Teilnehmerdaten aufgezeichnet und selbständig ausgewertet, womit dem Einsatzleiter nach dem Abbau der letzten vorgesehenen Verbindung der definitive Bestand der zur Verfügung stehenden Pikettmannschaft und deren Einsatzbereitschaftszeitpunkt angezeigt wird.

Darüber hinaus wird die Identität des gerufenen Endgerätes bzw. des gerufenen Teilnehmers durch die Steuereinheit überprüft, indem ein für das Endgerät bzw. für den Teilnehmer charakteristischer Identifikationscode von der Steuereinheit abgefragt und anschliessend mit einem von der Steuereinheit erwarteten Identifikationscode verglichen wird. Manipulationen von Unbefugten können somit weitgehend vermieden werden, was bei einer herkömmlichen Alarmierung durch einen Operator nicht ausgeschlossen werden kann. Zudem wird sowohl ein falsches Ansteuern eines Endgerätes als auch die Entgegennahme einer Alarmierung durch einen unbefugten Teilnehmer durch die Steuereinheit erkannt.

Schliesslich ergibt sich durch den kompakten und modularen Aufbau der Steuereinheit eine einfache Bedienung, eine kostengünstige Wartung und die Möglichkeit, Erweiterungen und Verbesserungen mit geringem Aufwand in die bestehende Lösung zu integrieren. Darüber hinaus lassen sich mehrere erfindungsgemässe Steuereinheiten an das selbe Vermittlungsnetz anschliessen, wobei sich mit mindestens einer dieser Steuereinheiten andere Steuereinheiten konfigurieren und/oder steuern lassen. Somit lässt sich das gesamte Alarmierungssystem von einer Steuerein` heit aus überwachen. In einer weiteren Ausführungsform, bei der mehrere Steuereinheiten verwendet werden, lassen sich überdies diese Steuereinheiten über ein lokales Netzwerk (LAN - Local Area Network) verbinden. Mit dieser Netzkonfiguration wird die Systemsicherheit weiter gesteigert, wenn die einzelnen Steuereinheiten derart eingestellt sind, dass jede Steuereinheit für sich alle bei einer Alarmierung vorkommenden Abläufe durchführen kann.

Die bereits erwähnte modulare Aufbauweise trägt zudem zu einer weiteren Kostenreduktion des gesamten Alarmierungssystems bei, denn die dezentralen Steuereinheiten müssen nicht mit allen Komponenten ausgerüstet werden. Beispielsweise können Ein- und Ausgabegeräte und die damit verbundenen Computerprogramme bei zusätzlichen Steuereinheiten weggelassen werden.

Die Erfindung wird nachfolgend anhand von Zeichnungen beispielsweise näher erläutert. Dabei zeigt
- Fig. 1: verschiedene an ein Vermittlungsnetz angeschlossene Steuereinheiten und Endgeräte,
- Fig. 2: einen hardwaremässigen Aufbau einer erfindungsgemässen Steuereinheit und
- Fig. 3: einen softwaremässigen Aufbau der Steuereinheit.

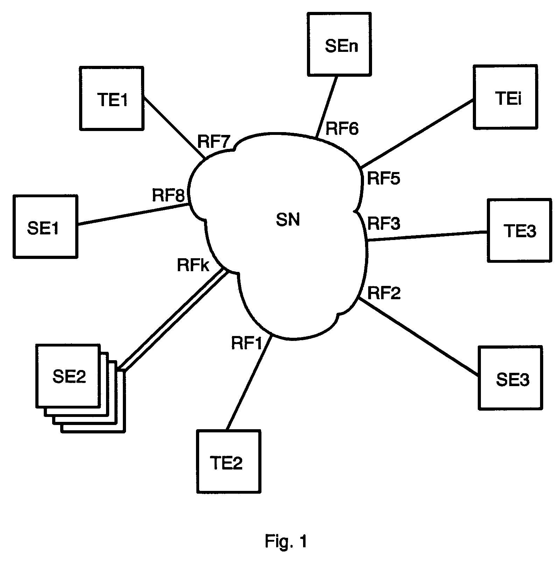

Fig. 1 zeigt ein Fernmeldenetz bestehend aus einem Vermittlungsnetz SN und verschiedenen über Referenzpunkte RF1 bis RFk an das Vermittlungsnetz SN angeschlossenen Steuereinheiten SE1 bis SEn und Endgeräten TE1 bis TEi, die beispielsweise Telefonapparate, Terminaladapter, Telekopierer der Gruppe 3 oder 4, usw. sein können. Beim Vermittlungsnetz SN handelt es sich vorzugsweise um ein nach ISDN- Normen aufgebautes Netz.

Anstelle von zur Verbindung von Steuereinheiten SE1 bis SEn mit dem Vermittlungsnetz SN vorgeschlagenen Basisanschlüssen können jedoch auch Primärratenanschlüsse (CCITT-Empfehlung I-431, Blue Book, Vol. III.8, Genf: ITU 1988) oder ähnliche in anderen Kommunikationsnetzen üblicherweise eingesetzte normierte Schnittstellen verwendet werden.

Die Steuereinheiten SE1 bis SEn sind dabei die eigentlichen Alarmierungsstationen, die sich vorzugsweise je bei einem Einsatzleiter befinden. Vorstellbar ist auch eine hierarchische Verknüpfung von verschiedenen Steuereinheiten SE1 bis SEn entsprechend der Hierarchie einer Alarmorganisation. So ist ein Alarmierungssystem vorstellbar, bei dem von einer übergeordneten Stelle, beispielsweise von der Steuereinheit SE1, verschiedene Steuereinheiten SE2 bis SEn alarmiert werden, die anschliessend die ihnen zugewiesenen Endgeräte TE1 bis TEi bzw. dessen Teilnehmer zur Übertragung der Teilnehmerdaten kontaktieren. Die in den Steuereinheiten SE2 bis SEn gesammelten Teilnehmerdaten können sofort analysiert und verarbeitet und/oder an die übergeordnete Steuereinheit SE1 zur Analyse und Verarbeitung übertragen werden.

Die Verwendung von mehreren an das gleiche Vermittlungsnetz SN angeschlossenen Steuereinheiten SE1 bis SEn hat bei der Ansteuerung von verschiedenen Endgeräten TE1 bis TEi neben einer grösseren Kapazität auch zur Folge, dass die Zuverlässigkeit eines solchen Alarmierungssystems gegenüber eines Alarmierungssystems mit einer einzigen oder nur wenigen Steuereinheiten SE1 bis SEn erhöht ist, denn bei einem Ausfall einer der Steuereinheiten SE1 bis SEn kann die Alarmierung von einer der noch intakten Steuereinheiten SE1 bis SEn übernommen werden. Dazu sind die in einer Alarmierungsgruppe zusammengefassten Steuereinheiten SE2 über ein lokales Netzwerk (LAN - Local Area Network) miteinander verbunden, über das die Steuereinheiten SE2 über den Referenzpunkt RFk auf das Vermittlungsnetz SN zugreifen können.

Zur Übermittlung der Teilnehmerdaten wird vorzugsweise das nunmehr weit verbreitete Tontastenwahlverfahren oder DTMF (Dual Tone Multi- Frequency Dialling) verwendet. Dieses bekannte Verfahren wird in der Fernmeldetechnik hauptsächlich zur Übermittlung der Adresse des gewünschten Teilnehmers - d.h. der Teilnehmernummer - an das Vermittlungsnetz verwendet. Dabei werden die zehn Ziffern und weitere Zeichen mit Hilfe von zwei aus sieben vorbestimmten Frequenzen codiert. Nachdem eine Verbindung aufgebaut ist, werden DTMF-Signale direkt dem gerufenen Teilnehmer übermittelt. Nach dem Zustandekommen einer Verbindung kann auch der gerufenen Teilnehmer DTMF-Signale an die rufende Steuereinheit SE1 bis SEn übermitteln. Dies wird zur Übertragung der vom Teilnehmer an die Steuereinheit SE1 bis SEn zu übermittelnden Teilnehmerdaten benützt. So werden beispielsweise ein Identifikationscode, Einsatzmöglichkeiten und frühest möglicher Einsatzzeitpunkt eines Teilnehmers mit den erwähnten Frequenzen codiert.

Im folgenden wird ausgehend von dem in Fig. 1 dargestellten Alarmierungssystem das erfindungsgemässe Verfahren erläutert, wobei zunächst davon ausgegangen wird, dass lediglich eine am Referenzpunkt RF8 angeschlossene Steuereinheit SE1 vorhanden ist, die zu den in einer Liste eingetragenen Endgeräten TE1 bis TEi jeweils eine Verbindung aufbaut. Entsprechendes gilt jedoch auch für die weiteren Steuereinheiten SE2 bis SEn.

Zunächst wird die Steuereinheit SE1 für ein automatisches Alarmieren vorbereitet, indem eine Liste der zu alarmierenden Endgeräte bzw. Teilnehmer - allenfalls mit den für diese gültigen Identifikationscode - in die Steuereinheit SE1 eingegeben wird. Ferner wird auch ein Ansagetext eingegeben, in dem Informationen über den bevorstehenden Einsatz, wie beispielsweise Besammlungsort und Ausrüstung, enthalten sind. Das Alarmierungsverfahren kann nach erfolgter Initialisierung ausgelöst werden, wobei jedes der Endgeräte TE1 bis TEi gemäss den folgenden Verfahrensschritten kontaktiert wird:
In einem ersten Verfahrensschritt wird eine Verbindung von der Steuereinheit SE1 über das Vermittlungsnetz SN zu einem der Endgeräte TE1 bis TEi aufgebaut. Kommt die Verbindung mit dem. ersten Endgerät TE1 zustande, so wird in einem zweiten Verfahrensschritt von der Steuereinheit SE1 der in der Initialisierungsphase aufgezeichnete Ansagetext an das Endgerät TE1 übermittelt. Gleichzeitig wird der Teilnehmer aufgefordert, den empfangenen Anruf mit dem Identifikationscode zu quittieren. Mit der Eingabe des Identifikationscodes bestätigt der Teilnehmer den Empfang der Nachricht. Ferner wird angegeben, ob und zu welchem Zeitpunkt Einsatzbereitschaft besteht.

Wie erwähnt, erfolgt die Eingabe der vom Endgerät TE1 an die Steuereinheit SE1 zu sendenden Daten beispielsweise mit Hilfe des Frequenzwahlverfahrens. Weitere Leistungsmerkmale werden. vom Endgerät TE1 nicht verlangt, d.h. der überwiegende Teil der im Handel verfügbaren Endgeräte können im erfindungsgemässen Verfahren verwendet werden.

Die Steuereinheit SE1 ihrerseits decodiert den empfangenen Identifikationscode und vergleicht diesen mit dem für das betreffende Endgerät erwarteten Identifikationscode. Wird von der Steuereinheit SE1 Übereinstimmung der beiden Identifikationscode festgestellt, so wurde mit dem richtigen Endgerät eine Verbindung aufgebaut und der gewünschte Teilnehmer wurde erreicht. Manipulationen sind damit weitgehend ausgeschlossen.

Nach erfolgter Aufzeichnung der erforderlichen Teilnehmerdaten in der Steuereinheit SE1 oder nach Ablauf einer gewissen Wartezeit, während der keine Daten übertragen werden, wird die Verbindung zwischen der Steuereinheit SE1 und des jeweiligen Endgerätes TE1 bis TEi wiederum abgebaut.

Nachdem die Verbindung abgebaut worden ist, wird von der Steuereinheit SE1 zum nächsten in` der Liste stehenden Endgerät TE2 bis TEi eine Verbindung aufgebaut und die selben, oben beschriebenen Verfahrensschritte werden durchgeführt, bis alle in der Liste aufgeführten Endgeräte kontaktiert wurden.

In einer weiteren Ausführungsform des erfindungsgemässen Verfahrens werden die einzelnen Verfahrensschritte und deren Ergebnisse in der Steuereinheit SE1 aufgezeichnet und protokolliert. Dies ist insbesondere vorteilhaft, wenn mehrere Steuereinheiten SE1 bis SEn bei der Alarmierung verwendet werden, wie dies beispielsweise bei der erwähnten hierarchischen Alarmierung der Fall ist. Mehrere Steuereinheiten SE1 bis SEn, die vorteilhafterweise über ein lokales Netzwerk (LAN- Local Area Network) miteinander verbunden sind, können dabei Parallel betrieben werden, wobei das Schlussresultat, beispielsweise der Bestand der einsatzfähigen Pikettmannschaft, von einer zentralen bzw. übergeordneten Steuereinheit bestimmt werden kann. Dazu sind die zu den verschiedenen Steuereinheiten SE1 bis SEn übertragenen Teilnehmerdaten an die zentrale Steuereinheit zu übermitteln.

Anstelle der alleinigen Anzeige der nach Ablauf der Alarmierung zur Verfügung stehenden Daten, wie beispielsweise den Bestand der Pikettmannschaft, können auch momentane Bestände während der laufenden Alarmierung angezeigt werden.

Darüber hinaus ist zu erwähnen, dass das erfindungsgemässe Verfahren auch dann verwendet werden kann, wenn anstelle des Tonfrequenzwahlverfahrens beispielsweise nur eine oder aber auch mehrere Frequenzkomponenten gleichzeitig übertragen werden.

In Fig. 1 ist zudem angedeutet, dass Steuereinheiten SE2 auch über zwei oder mehrere Verbindungen an das Vermittlungsnetz SN angeschlossen werden kann. Wie bei dezentralen Steuer-` einheiten wird dadurch die Anzahl Verbindungen pro Zeiteinheit verdoppelt und die Systemsicherheit verbessert.

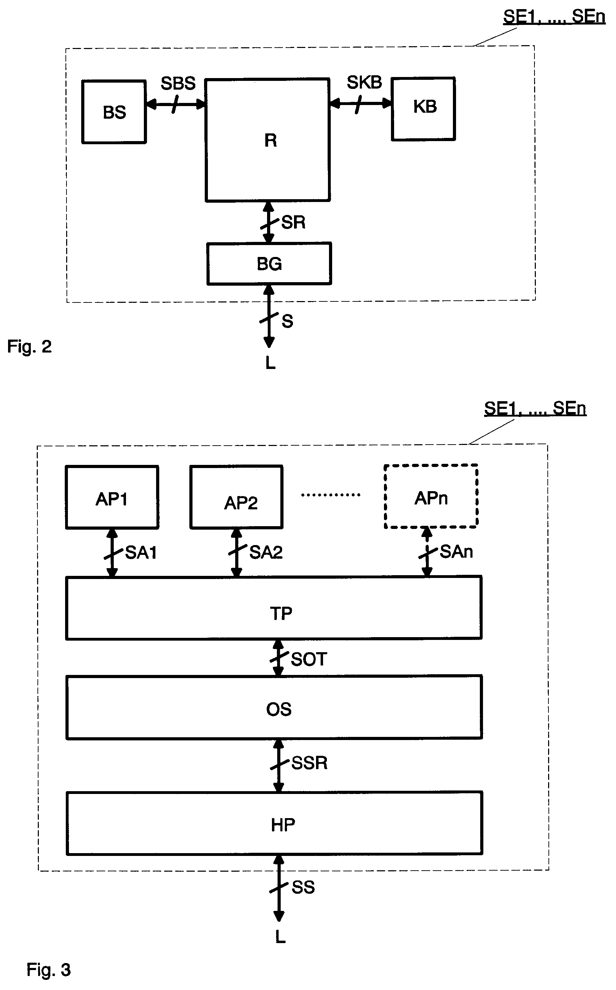

Fig. 2 zeigt einen hardwaremässigen Aufbau der erfindungsgemässen Steuereinheit SE1 bis SEn in der voll ausgebauten Ausführung für den Betrieb als Alarmierungsstation in einem beispielsweise nach ISDN- (Integrated Services Digital Networks)- Normen aufgebauten Vermittlungsnetz SN (Fig. 1). Die Steuereinheiten SE1 bis SEn sind von aussen über eine Schnittstelle S an die Leitung L des Vermittlungsnetzes SN (Fig. 1) anschliessbar, wobei die Schnittstelle S im vorliegenden Ausführungsbeispiel durch die CCITT- (Comité Consultatif International Télégraphique et Téléhonique)- Empfehlung Q.931 (CCITT: Recommendation Q.931: Blue Book, Vol. VI.11, Genf: ITU 1988) als Basisanschluss realisiert ist. Die Steuereinheiten SE1 bis SEn selbst bestehen je aus einer Schnittstellenbaugruppe BG, einem Rechner R und zwei optionalen Ein- bzw. Ausgabeeinheiten KB bzw. BS. Dabei nimmt die Schnittstellenbaugruppe BG eine eigentliche Schnittstellenanpassung zwischen der ISDN- typischen Schnittstelle S und einer internen Schnittstelle SR des Rechners R vor. Über zwei weitere Schnittstellen SBS und SKB wird der Rechner R ferner mit der Eingabe- und der Ausgabeeinheit KB bzw. BS verbunden. Wird für die Schnittstelle SR eine verbreitete Norm - wie beispielsweise EISA, AT-Bus oder PCI-Bus - verwendet und werden die Schnittstellen SBS und SKB entsprechend den bei handelsüblichen Ein- und Ausgabegeräten verwendeten Schnittstellen gewählt, so können einzelne Komponenten der Steuereinheiten SE1 bis SEn ausgetauscht werden, ohne dass Anpassungen notwendig sind. Dies gilt insbesondere auch für die Schnittstellenbaugruppe BG, die etwa unter der Bezeichnung "ISDN-Karten für Basisanschlüsse" von verschiedenen Herstellern im Handel erhältlich sind.

Sind in spezielle Anwendungen - wie beispielsweise bei einem Alarmierungssystem, das aus verschiedenen miteinander verbundenen Steuereinheiten besteht - keine Ein- und Ausgabeeinheiten KB und BS notwendig, so besteht der hardwaremässige Aufbau der untergeordneten Steuereinheiten lediglich aus dem Rechner R und der Schnittstellenbaugruppe BG.

Werden mehrere Steuereinheiten SE2 (Fig. 1) durch ein lokales Netzwerk (LAN - Local Area Network) zur Steigerung der Leistungsfähigkeit und der Systemsicherheit zu einer Alarmierungsgruppe zusammengefasst, so ist nicht jede Steuereinheit SE2 mit einer Schnittstellenbaugruppe BG zur Anpassung der Steuereinheit SE2 an die Schnittstelle S ausgerüstet. Vielmehr weisen alle Steuereinheiten einer derartigen Alarmierungsgruppe Netzbaugruppen zum Datenaustausch über das lokale Netzwerk auf (in Fig. 2 nicht dargestellt).

In Fig. 3 ist ein Softwarekonzept zu der anhand Fig. 2 erläuterten Hardware dargestellt, wobei sich dieses Softwarekonzept auch für einen Hardwareaufbau eignet, der sich von dem anhand Fig. 2 beschriebenen unterscheidet.

Zu den hardwaremässig vorgegebenen Schnittstellen S und SR (Fig. 2) sind entsprechende softwaremässige Schnittstellen SS und SSR vorgesehen, die von einem in der Schnittstellenbaugruppe BG (Fig. 2) ablaufenden und diese steuernden Hilfsprogramm HP kontrolliert werden. Das Hilfsprogramm HP steuert somit vor allem die in der speziellen Hardware, nämlich der Schnittstellenbaugruppe BG (Fig. 2), vorhandenen Funktionen sowie die für die Normen der Schnittstelle SS und SSR verwendeten Protokolle. Ein über die Schnittstelle SSR mit dem Hilfsprogramm HP kommunizierendes Systemprogramm OS übernimmt im Rechner R eine analoge Funktion wie das Hilfsprogramm HP in der Schnittstellenbaugruppe BG: Das Systemprogramm OS steuert die hardwarenahen Komponenten des Rechners R und bedient eine weitere normierte Schnittstelle zu einem auf einem erhöhten Abstraktionsniveau liegenden Treiberprogramm TP. Dieses Treiberprogramm TP enthält sämtliche zur Kommunikation mit dem Vermittlungsnetz SN (Fig. 1) bzw. mit anderen Endgeräten des Fernmeldenetzes benötigten Funktionen bzw. Meldun` gen, wie beispielsweise Aufforderung zur Datenübertragung, Signalisierungen, Anzeigen von Fehlern, usw., ohne dass alle damit verbundenen Einzelheiten dem Benützer des Treiberprogrammes TP bekannt sein müssen.
Die Gesamtheit dieser Funktionen und Meldungen bildet die Grundlage für Schnittstellen SA1 bis SAn zu Applikationsprogrammen AP1 bis APn, die ein weiteres und letztes Abstraktionsniveau darstellen. Die Applikationsprogramme AP1 bis APn beinhalten neben den eigentlichen Alarmierungssequenzen beispielsweise auch deren Protokollierung, statistische Auswertungen, Hilfsprogramme zur Einstellung der Parameter der Steuereinheiten SE1 bis SEn (Fig. 1), Fernbedienung von mit dem gleichen Vermittlungsnetz SN (Fig. 1) verbundenen Steuereinheiten SE1 bis SEn, usw.
Weitere Beispiele für Applikationsprogramme AP1 bis APn sind die verschiedenen Ausführungsvarianten der Alarmierungssequenzen und das Erzeugen und Erkennen von Frequenzen des Frequenzwahlverfahrens.

Die vorzugsweise ebenfalls über Basisanschlüsse an das Vermittlungsnetz SN (Fig. 1) angeschlossenen Steuereinheiten SE1 bis SEn können wie bereits angedeutet unterschiedlich ausgestattet sein. So ist denkbar, dass die Steuereinheiten SE1 bis SEn nur mit den minimal erforderlichen Hardwarekomponenten Rechner R und Schnittstellenbaugruppe BG (Fig. 2) sowie mit den notwendigen Applikationsprogrammen AP1 bis APe (Fig. 3) - neben dem immer vorhandenen Hilfsprogramm HP, dem Systemprogramm OS und dem Treiberprogramm TP - ausgerüstet sind und dass nur die Steuereinheit SE1 mit Eingabe- und Ausgabeeinheiten KB und BS (Fig. 2) und zusätzlichen Applikationsprogrammen APe+ 1 bis APn versehen sind. Die Konfiguration und Steuerung der Steuereinheiten SE2 bis SEn wird in diesem Falle von der zentralen Steuereinheit SE1 vorgenommen, die mit Hilfe einer Fernsteuerung über das Vermittlungsnetz SN (Fig. 1) oder über ein lokales Netzwerk (nicht dargestellt) die Steuereinheiten SE2 bis SEn zu steuern und kontrollieren vermag.

Die Steuereinheiten SE1 bis SEn können somit an beliebigen Orten installiert werden, da sie über das Vermittlungsnetz SN (Fig. 1) oder über das lokale Netzwerk selbst gesteuert werden können. Damit ergibt sich einen weiteren, bereits angedeuteten Vorteil der modularen Aufbauweise der Steuereinheiten SE1 bis SEn, denn Kosten und Wartungsaufwand können durch die je nach Anforderung benötigten Hardwarekomponenten (Fig. 2) und Applikationsprogrammen AP1 bis APn (Fig. 3) gezielt minimiert werden.

## Patentansprüche

1. Verfahren zum Übertragen von Teilnehmerdaten zwischen an ein Vermittlungsnetz (SN) angeschlossenen Endgeräten (TE1, ..., TEi, SE1, ..., SEn), wobei mindestens zwei Endgeräte (TE1, ..., TEi, SE1, ..., SEn) an das Vermittlungsnetz (SN) angeschlossen sind, **dadurch gekennzeichnet**, dass mindestens eines der Endgeräte (TE1, ..., TEi, SE1, ..., SEn) eine Steuereinheit (SE1, ..., SEn) ist und dass mindestens ein zweites Endgerät (TE1, ..., TEi) vorgesehen ist, das beispielsweise ein Telefonapparat, ein Fernkopierer, ein Anrufbeantworter oder dergleichen ist, dass in der Steuereinheit (SE1, ..., SEn) eine Liste von zu kontaktierenden Endgeräten (TE1, ..., TEi) enthalten ist, wobei das Verfahren darin besteht, dass in einem ersten Verfahrensschritt von der Steuereinheit (SE1, ..., SEn) eine Verbindung zum ersten in der Liste eingetragenen Endgerät (TE1, ..., TEi) aufgebaut wird, dass, vorausgesetzt die Verbindung kommt zustande, in einem zweiten Verfahrensschritt vom Endgerät (TE1, ..., TEi) Teilnehmerdaten abgefragt und an die Steuereinheit (SE1, ..., SEn) übermittelt werden, dass in einem dritten Verfahrensschritt die Verbindung abgebaut wird und dass die drei Verfahrensschritte für alle weiteren in der Liste eingetragenen Endgeräte (TE1, ..., TEi) durchgeführt werden.

2. Verfahren nach Anspruch 1, **dadurch gekennzeichnet**, dass vor dem zweiten Verfahrensschritt eine Meldung an das Endgerät (TE1, ..., TEi) abgesetzt wird.

3. Verfahren nach Anspruch 1 oder 2, **dadurch gekennzeichnet**, dass die einzelnen Verbindungen und die während dem bestehen der Verbindung übertragenen Teilnehmerdaten in der Steuereinheit (SE1, ..., SEn) aufgezeichnet werden.

4. Verfahren nach einem oder mehrerer der Ansprüche 1 bis 3, **dadurch gekennzeichnet**, dass im jeweiligen zweiten Verfahrensschritt vom Endgerät (TE1, ..., TEi) an die Steuereinheit (SE1, ..., SEn) ein für das Endgerät (TE1, ..., TEi) eindeutiger Identifikationscode übermittelt wird.

5. Verfahren nach einem der vorangehenden Ansprüche, **dadurch gekennzeichnet**, dass mehrere Steuereinheiten (SE1, ..., SEn) gleichzeitig Listen mit zu kontaktierenden Endgeräten (TE1, ..., TEi) abarbeiten, wobei ein Endgerät (TE1, ..., TEi) jeweils nur in einer Liste enthalten ist.

6. Verfahren nach Anspruch 5, **dadurch gekennzeichnet**, dass nach dem Abarbeiten der Listen durch die verschiedenen Steuereinheiten (SE1, ..., SEn) die aufgezeichneten Teilnehmerdaten und die Protokollierung der Verbindungen an eine übergeordnete Steuereinheit (SE1, ..., SEn) zur zentralen Auswertung übermittelt werden.

7. Verfahren nach einem der vorangehenden Ansprüche, **dadurch gekennzeichnet**, dass die Teilnehmerdaten und/oder ein allfälliger Identifikationscode mit Hilfe des Frequenzwahlverfahrens codiert werden.

8. Verfahren nach einem der vorangehenden Ansprüche, **dadurch gekennzeichnet**, dass mehrere Steuereinheiten (SE1, ..., SEn), die über ein lokales Netzwerk miteinander verbunden sind, zur Übertragung von Teilnehmerdaten vorgesehen sind.

9. Anwendung des Verfahrens nach einem der vorangehenden Ansprüche zur Alarmierung von Teilnehmern eines Fernmeldenetzes, wobei die zu alarmierenden Teilnehmer in Listen eingetragen sind, die durch eine der Steuereinheiten (SE1, ..., SEn) abgearbeitet werden.
